# EUROPÄISCHE PATENTSCHRIFT

(11) **EP 0 443 193 B1**
(45) Veröffentlichungstag und Bekanntmachung des Hinweises auf die Patenterteilung: **22.09.1993**
(21) Anmeldenummer: 90125318.7
(22) Anmeldetag: 22.12.1990
(51) Int. Cl.: F16L 23/02, F16L 23/14

(54) **Stossverbindung zwischen zwei Luftkanalabschnitten aus Blech**
Butt connection between two duct sections of sheet metal
Raccord droit entre deux sections de canaux d'air en tôle

(30) Priorität: 17.02.1990 DE 4005139; 24.07.1990 DE 4023470
(43) Veröffentlichungstag der Anmeldung: 28.08.1991
(73) Patentinhaber: METU-System Meinig KG, D-78604 Rietheim-Weilheim (DE)
(72) Erfinder: Meinig, Manfred, W-7201 Rietheim-Weilheim 2 (DE)
(74) Vertreter: Patentanwälte Westphal, Buchner, Mussgnug Neunert, Göhring

(56) Entgegenhaltungen:
- EP-A- 0 047 467
- EP-A- 0 197 466
- EP-A- 0 354 627
- BE-A- 892 865
- BE-A- 901 841
- DD-A- 145 786
- DE-A- 1 750 133
- DE-C- 3 143 893

## Beschreibung

Die Erfindung betrifft eine Stoßverbindung zwischen zwei runden, flachovalen oder rechteckigen Luftkanalabschnitten aus Blech nach dem Oberbegriff des Anspruchs 1.

Im Luftkanalbau sind zahlreiche verschiedene Ausführungsformen von Stoßverbindungen zwischen den einzelnen Abschnitten eines Luftkanals bekannt, wobei jeweils unterschiedliche Flanschrahmen zum Verbinden von rechteckigen, runden oder flachovalen Luftkanälen verwendet werden müssen, um einerseits billige Herstellung und Montage und andererseits ausreichende Stabilität und Abdichtung zu erzielen. Außerdem ist im Luftkanalbau eine Wandlung im Gange, indem immer mehr von aus Blechtafeln abgekanteten, gebogenen und gefalzten Blechkanälen zu aus Blechbändern gewickelten Kanälen übergegangen wird. Ausgehend von dem altbekannten runden sog. Wickelfalzrohr bzw. Spiralfalzrohr stellte man durch Spreizung dieser runden Rohre Rohre mit flachovalem Querschnitt her, und neuerdings gibt es auch gewickelte Rechteckkanäle mit leicht gerundeten Ecken. Die gewickelten Kanäle haben zahlreiche Vorteile, wie Luftdichtigkeit ohne besondere Dichtungsmaßnahmen, automatische kontinuierliche Fertigung, beliebige Längen der einzelnen Luftkanalabschnitte, wobei meist eine Länge von 6 m üblich ist, und infolgedessen eine enorme Ersparnis von Flanschen und Montagezeit. Flachovale und rechteckige Querschnitte verwendet man deshalb bevorzugt, weil in den meisten Gebäuden die Raumhöhe nicht für größere runde Rohre ausreicht.

Andererseits treten bei Wickelfalzrohren und daraus hergestellten flachovalen bzw. rechteckigen Kanälen bei Anbringung eines Flanschrahmens am Ende eines Luftkanalabschnitts Probleme wegen des spiralig um das Rohr verlaufenden Wickelfalzes auf. Bei allen gewickelten Rohren und Kanälen liegt der Falz außen, da er im Kanalinneren den Luftstrom behindern würde. Gewickelte Rohre und Kanäle haben deshalb nur eine glatte Innenseite, während aus Blechtafeln hergestellte Kanäle außen und innen glatt sind. Vergrößert wird das Problem noch dadurch, daß man bei flachovalen und rechteckigen gewickelten Kanälen, aber auch bei runden Wickelfalzrohren immer mehr den sog. Stehfalz oder auch zusätzliche Rippen zur Versteifung der Kanalflächen einsetzt, um Blechdicke einzusparen. Diese Stehfalz- bzw. Rippenversteifung ist besonders bei rechteckigen und flachovalen gewickelten Kanälen nötig, da hier die Stabilisierung durch Wölbung wegfällt, welche beim Rundrohr sehr hilfreich ist.

Wegen dieser unregelmäßigen Vorsprünge auf der Außenfläche gewickelter Kanäle und Rohre ist es unmöglich, die Kanalwand wie beim herkömmlichen Rechteckkanal in den Spalt eines auf das Rohr- oder Kanalende aufzusetzenden Flanschprofils zur Herstellung der Stoßverbindung einzustecken. Es ist daher nur möglich, ein im wesentlichen L-förmiges Flanschprofil mit einem etwa radial nach außen stehenden Flanschschenkel und einem an der Innenseite des Rohres oder Kanals anliegenden und an dieser Innenseite befestigten Flanschschenkel zu verwenden und eine Abdichtung zwischen Flanschprofil und Kanalende vorzusehen. Für Rundrohre ist eine Ausführungsform bekannt, bei der der innere Flanschschenkel des Flanschprofils durch einen Spreizrand an der Innenseite des Rohrs festgelegt ist. Bei einem flachovalen oder rechteckigen Kanal funktioniert eine solche Festlegung des Flanschrahmens jedoch nicht mehr, sondern dieser muß am Blechkanal durch Punktschweißung, Verschraubung oder Vernietung befestigt werden. Eine Abdichtung erfolgt dann durch Einbetten des Endes der Kanalwandung in eine Raupe aus Dichtungsmasse am Flanschprofil. Diese Ausführungsformen haben den Nachteil, daß bei Rundrohren zwischen den Enden des rundgebogenen Flanschrahmens und bei flachovalen oder rechteckigen Kanälen zwischen den einzelnen Abschnitten des Flanschrahmens durch Zwischenverbinder Spalte entstehen, die nicht in dieser einfachen Weise abzudichten sind. Ferner besteht hier der Nachteil, daß ein L-förmiges Profil ohne zusätzliche Stabilisierungseinrichtungen dem Zug der die beiden Flanschrahmen zu einer Stoßverbindung zusammenziehenden Schraubbolzen kaum standhält. Für rechteckige Wickelkanäle mit gerundeten Ecken eignen sich alle diese bekannten Stoßverbindungen nicht, da ein die gerundete Ecke überbrückender "Eckverbinder" in bekannten Ausführungsformen eine sehr lange nicht abgedichtete Strecke zwischen den einzelnen Flanschrahmenabschnitten aufwiese und ebenfalls dem Zug der Verbindungsschraubbolzen nicht standhalten könnte.

Ferner ist bei allen erwähnten Stoßverbindungsarten der Nachteil zu berücksichtigen, daß bei den Zwischenverbindern zwischen den einzelnen Flanschabschnitten, die gemeinsam einen Flanschrahmen bilden, der nicht abgedichtete Abstand dadurch noch wesentlich vergrößert wird, daß das Flanschprofil einige mm kleiner angefertigt werden muß als das Kanalinnere, damit man den inneren Flanschschenkel überhaupt ins Kanalinnere einführen kann und den unvermeidlichen Abweichungen der Kanalinnenabmessungen Rechnung getragen wird. Beim Befestigen des Flanschrahmens wird deshalb der Zwischenverbinder etwas aus dem Flanschprofil herausgezogen, damit der innere Flanschprofilschenkel satt an der Kanalinnenseite anliegen kann.

Aus der EP-A-0 047 467 und der EP-A-0 197 466 sind Stoßverbindungen bekannt, deren Flanschrahmen ein dreieckiges Hohlprofil aufweist, wobei also zusätzlich zu einem senkrecht zur Kanalwandung und einem parallel zur Kanalwandung angeordneten Flanschschenkel ein diese beiden Schenkel verbindender schräger Schenkel vorhanden ist. In diese Hohlprofile greifen Zwischenverbinder ein, die an zweien dieser Schenkel anliegen. Derartige Dreiecksprofile, in die die Enden der Kanalabschnitte eingeschoben werden, sind aber, wie oben ausgeführt, bei Wickelfalzrohren und daraus geformten flachovalen oder rechteckigen Kanälen nicht anwendbar. Insbesondere macht die Abdichtung an den zu verbindenden Flanschenden Schwierigkeiten.

Durch die Erfindung soll eine Stoßverbindung der eingangs genannten Art geschaffen werden, die sowohl für runde, ovale oder rechteckige Luftkanalabschnitte gleich gut verwendbar ist und trotz Herstellung des Luftkanals durch das Wickelverfahren und den dadurch notwendigen Falzen und ggf. Versteifungsrippen eine durchgehende einwandfreie Abdichtung der Flanschrahmen einschließlich Zwischenverbindern an den Enden der Kanalabschnitte ermöglicht.

Diese Aufgabe wird erfindungsgemäß durch die Merkmale des Anspruchs 1 gelöst.

Durch die wenigstens teilweise Ausbildung jedes Flanschschenkels des Flanschprofils als Hohlprofil, das Verbinden der Hohlprofile zu einem L-förmigen Hohlraum und das Einfügen eines satt in diesem Hohlprofil sitzenden L-förmigen Zwischenverbinders wird einerseits gewährleistet, daß die Flanschrahmen den Zug der Verbindungseinrichtungen, wie Verbindungsbolzen oder Spannringen, im wesentlichen ohne Verzerrung aushalten und daß andererseits eine durchlaufende Abdichtung des Kanalabschnittendes gegen den Flanschrahmen auch im Bereich des an der Innenseite des Kanalabschnittendes unmittelbar anliegenden inneren Profilschenkels des Zwischenverbinders möglich ist. Es kommt nicht mehr auf irgendwelche Toleranzen zwischen dem Kanalende und dem Flanschrahmen einschließlich der winkelförmigen oder entsprechend rundgebogenen Zwischenverbinder an, um eine gute durchlaufende Abdichtung zu erzielen. Die erfindungsgemäße Stoßverbindung ist für alle Arten von runden, flachovalen oder rechteckigen Luftkanälen in gleicher Weise anwendbar, wodurch sich Herstellung und Lagerhaltung enorm vereinfachen. Es spielt bei dieser Art von Stoßverbindung keine Rolle mehr, ob der Zwischenverbinder ganz in die offenen Enden der anschließenden Abschnitte des Flanschrahmens eingeführt wird, so daß die Profilenden der Flanschabschnitte zusammenstoßen, oder ob ein Mittelteil des Zwischenverbinders freiliegt. In beiden Fällen kann z.B. eine Dichtungsraupe nahtlos um den ganzen Flanschrahmen laufen.

Besonders zweckmäßig ist eine Ausführungsform nach Anspruch 2, bei der die an der Innenseite der Kanalwandung unmittelbar anliegenden Mittelabschnitte der Zwischenverbinder einen Teil des Zuges der Verbindungsschrauben aufnehmen, so daß der Zug der Verbindungsschrauben nicht mehr voll von den Flanschrahmenschenkeln aufgenommen werden muß, sondern zum großen Teil von den Zwischenverbindern selbst getragen wird. Dadurch erhöht sich die Stabilität der gesamten Stoßverbindung.

Eine noch größere Stabilität ergibt sich, wenn gemäß Anspruch 3 die inneren Flanschschenkel über das Hohlprofil hinaus verlängert werden und somit eine größere Auflagefläche an der Kanalinnenseite erzielt wird. Insbesondere können gemäß Anspruch 4 zum gleichen Zweck die Mittelabschnitte der Zwischenverbinder verlängert werden. Eine besonders hohe Stabilität ergibt sich, wenn nach Anspruch 5 diese Mittelabschnitte unmittelbar an der Kanalwandung befestigt werden.

Nach Anspruch 6 kann eine Dichtungsraupe bei der erfindungsgemäßen Stoßverbindung lückenlos um den gesamten Flanschrahmen einschließlich der Zwischenverbinder verlaufen, was die einfachste und sicherste Art einer Abdichtung darstellt.

Anspruch 7 stellt besonders heraus, daß die erfindungsgemäße Stoßverbindung für Zwischenverbinder jeder Art, insbesondere gerade, gebogene oder winkelförmige Zwischenverbinder, gleichermaßen gut anwendbar ist.

Der zusätzlichen Versteifung und Stabilisierung der Stoßverbindung dienen die Maßnahmen nach den Ansprüchen 8 bis 11, wobei insbesondere die wellenförmigen Ausbuchtungen bzw. Zähne gemäß Anspruch 10 ein elastisch federndes Andrücken der Kanalwandung gegen den inneren Profilschenkel des Zwischenverbinders gewährleistet, wobei nach außen stehende Wickelfalze und/oder Rippen federnd von diesen Ausbuchtungen oder Zähnen aufgenommen bzw. unter diesen durchgeschoben werden können.

Grundsätzlich können die die Schraubbolzen der Stoßverbindung aufnehmenden Durchbrüche an beliebiger Stelle jedes Flanschrahmens angeordnet werden, d.h. also in den freiliegenden Mittelabschnitten der Zwischenverbinder oder aber in den Enden der einzelnen Flanschabschnitte sowie den diese ausfüllenden Endabschnitten der Zwischenverbinder. Bei Ausführungsformen nach den Ansprüchen 11 bis 13, bei denen zur weiteren Versteifung ein abgekanteter Rand des äußeren Profilschenkels des Zwischenverbinders vorgesehen ist, kann gemäß Anspruch 14 der Zwischenverbinder im Bereich der Durchbrüche abgeflacht sein, um eine größere Steifheit und Widerstandskraft des Zwischenverbinders und/oder ein gutes Sitzen der Bolzenköpfe bzw. Muttern zu gewährleisten. Die Abflachung kann nach Anspruch 15 durch Zusammendrücken des abgekanteten Randes bzw. durch Weglassen dieses Randes in den abgeflachten Bereichen von vornherein erreicht werden.

Bei runden Luftkanalabschnitten kann gemäß den Ansprüchen 16 und 17 die Festlegung des Flanschrahmens am Luftkanalabschnitt besonders zweckmäßig durch einen an der Innenseite des Rundrohrs unter Vorspannung eingespreizten Ringsteg erfolgen, der an sich aus der DE-PS 31 43 893 bekannt ist.

Anhand der Figuren werden Ausführungsbeispiele der Erfindung näher erläutert. Es zeigen
- Fig. 1: einen axialen Teilschnitt durch eine erste Ausführungsform der erfindungsgemäßen Stoßverbindung,
- Fig. 2: einen nur ein Kanalende und einen Flanschrahmen umfassenden schematisch vereinfachten axialen Teilschnitt durch eine zweite Ausführungsform,
- Fig. 3 u. 4: der Fig. 2 entsprechende schematische Teilschnitte durch weitere Ausführungsformen,
- Fig. 5 u. 6: Teilschrägansichten von zwei Ausführungsformen einer Profilwand der in 4 dargestellten Ausführungsform,
- Fig. 7: einen der Fig. 2 entsprechenden schematischen Teilschnitt durch eine weitere Ausführungsform,
- Fig. 8: eine Teilschrägansicht der in Fig. 2 gezeigten Ausführungsform im Bereich eines Zwischenverbinders, wobei zur besseren Übersichtlichkeit die Kanalwandung weggelassen ist,
- Fig. 9 bis 11, 14, 15 und 18: der Fig. 8 entsprechende Teilschrägansichten weiterer Ausführungsformen,
- Fig. 12: einen Schnitt längs der Linie XII-XII in Fig. 11,
- Fig. 13: einen Schnitt längs der Linie XIII-XIII in Fig. 11,
- Fig. 16: einen Schnitt längs der Linie XVI-XVI in Fig. 15,
- Fig. 17: einen Schnitt längs der Linie XVII-XVII in Fig. 15,
- Fig. 19: einen der Fig. 1 entsprechenden axialen Teilschnitt durch eine für Rundrohre geeignete Ausführungsform mit Spreizrand und Spannring und
- Fig. 20: die gleiche Ausführungsform ohne Spreizrand und Spannring.

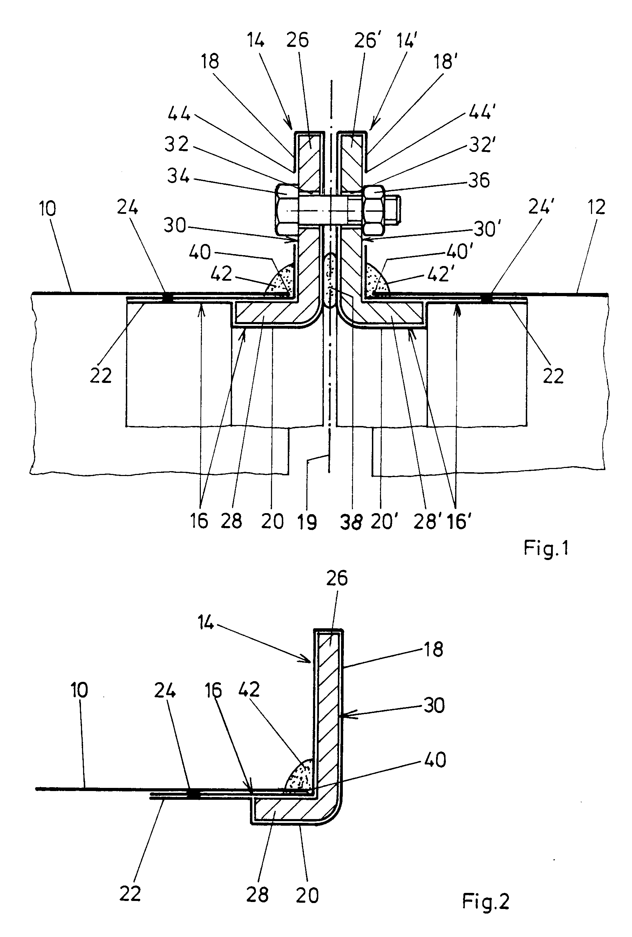

Bei der in Fig. 1 dargestellten Ausführungsform der Stoßverbindung ist jeweils ein Endteil eines Blechkanalabschnitts 10 bzw. 12 dargestellt, wobei an jedem Kanalabschnittende ein allgemein mit 14 bzw. 14' bezeichneter Flanschrahmen befestigt ist. Jeder Flanschrahmen 14, 14' weist in dem in Fig. 1 gezeigten Profil einen an der Innenseite des zugehörigen Kanalabschnitts 10 bzw. 12 anliegenden inneren Flanschschenkel 16 bzw. 16' und einen vom Kanalabschnitt 10, 12 etwa radial abstehenden äußeren Flanschschenkel 18 bzw. 18' auf. Die äußeren Flanschschenkel 18, 18' sind durchgehend als Hohlprofil ausgebildet, während vom inneren Flanschschenkel 16, 16' nur ein der zwischen den beiden Flanschrahmen 14, 14' angeordneten Stoßfläche 19 der Stoßverbindung nahegelegener Teil 20 bzw. 20' als Hohlprofil ausgebildet ist. Dieser Hohlprofilteil 20, 20' ist ins Innere der Kanalabschnitte 10, 12 als flach zusammengedrückter doppelwandiger Profilteil 22 bzw. 22' verlängert. Die flachen Profilteile 22, 22' sind durch Punktschweißung 24 bzw. 24' mit dem Ende jedes Kanalabschnitts 10 bzw. 12 fest verbunden.

Die Hohlprofilteile 18, 18' und 20, 20' der Flanschrahmen 14, 14' sind von den äußeren Schenkeln 26, 26' bzw. inneren Schenkeln 28 bzw. 28' von allgemein mit 30 bzw. 30' bezeichneten, L-förmigen Zwischenverbindern in den Bereichen ausgefüllt, in denen zwei Enden der Flanschrahmen 14, 14' zusammenkommen, wie weiter unten näher erläutert. Die äußeren Schenkel 26, 26' der Zwischenverbinder 30, 30' sowie die zugehörigen Bereiche der äußeren Profilschenkel 18, 18' der Flanschrahmen 14, 14' weisen Durchbrüche 32 bzw. 32' auf, durch die Schraubbolzen 34 geführt sind, die auf der Gegenseite durch Muttern 36 festgehalten sind. Zwischen den Flanschrahmen 14, 14' sind Dichtungsstreifen 38 aus elastischer Dichtungsmasse angeordnet, die rings um die gesamte Stoßverbindung verlaufen. Die Enden 40 bzw. 40' der Kanalabschnitte 10, 12 sind in ebenfalls lückenlos durchlaufende Dichtungsraupen 42 bzw. 42' aus elastischem Dichtungsmaterial eingebettet, welche in den Ecken des L-förmigen Profils der Flanschrahmen 14, 14' bzw. in den zwischen den einzelnen Flanschrahmenabschnitten liegenden Bereichen in der Ecke des Profils der Zwischenverbinder 30, 30' angeordnet ist.

Da der Zug der verbindenden Schraubenbolzen 34 bei der erfindungsgemäßen Stoßverbindung außer vom Profil der Flanschrahmenabschnitte 14, 14' vor allem von den die Flanschrahmenhohlprofile ausfüllenden, wesentlich kräftigeren L-förmigen Zwischenverbindern 30, 30' aufgenommen wird, ist diese Form der Stoßverbindung für jede Art von runden, flachovalen oder rechteckigen Blechkanälen hervorragend geeignet, sowohl was die Stabilität als auch die durchgehende Abdichtung der Stoßverbindung anbetrifft.

Bei der in Fig. 1 dargestellten Ausführungsform sind an der von der Stoßfläche wegweisenden Seite der äußeren Schenkel der Flanschrahmenabschnitte 14, 14' Aussparungen 44 bzw. 44' vorgesehen, welche die Herstellung des Profils etwas vereinfachen und die Stabilität der Anordnung wegen der wesentlich größeren Stabilität der Zwischenverbinder 30 nur unwesentlich beeinflussen. Bei Ausführungsformen mit längeren geraden Flanschrahmenabschnitten zwischen den einzelnen Zwischenverbindern ist jedoch die höhere Stabilität der in Fig. 2 dargestellten geschlossenen Ausführungsform vorzuziehen. Es ist zu beachten, daß bei dieser und allen folgenden Ausführungsformen für gleiche oder entsprechende Teile die gleichen Bezugszeichen verwendet sind.

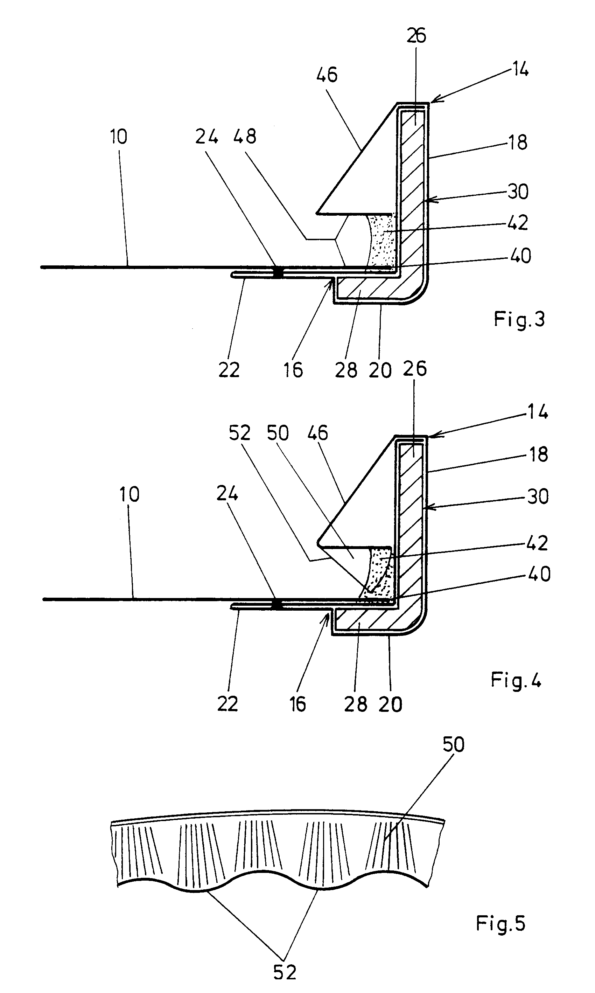

Bei der in Fig. 3 dargestellten Ausführungsform weist der äußere Flanschschenkel 18 zusätzlich ein von der Stoßfläche der Kanalabschnitte 10, 12 wegweisendes dreieckförmiges Hohlprofil 46 auf, das mit der Kanalwand 10 eine Rinne 48 zum Schutz der Dichtungsraupe 42 und zur Führung der Kanalwand 10 bildet. Außerdem kann die Rinne 48 die nicht gezeigten von der Kanalwand 10 nach außen stehenden Spiralfalze und Spiralrippen aufnehmen.

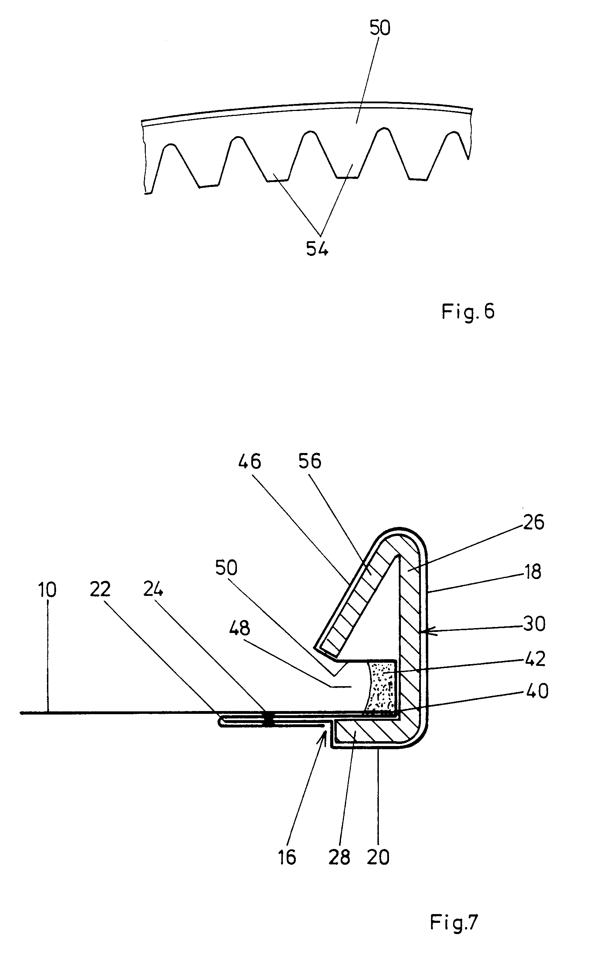

Bei der Ausführungsform gemäß Fig. 4 verläuft die zur Kanalwandung des Kanalabschnitts 10 hinweisende Fläche 50 des dreieckförmigen Hohlprofils 46 zur Stoßfläche hin schräg nach innen und weist die Kanalwandung 10 gegen den inneren Schenkel 28 des Zwischenverbinderprofils drückende wellenförmige Ausbuchtungen 52 auf. Der wellenförmige Verlauf dieser Wandung 50 mit den Ausbuchtungen 52 ist in einem Ausschnitt in Fig. 5 näher dargestellt.

Statt der wellenförmigen Ausbuchtungen kann die schräge Wandung 50 auch trapezförmige oder anders geformte Zähne 54 aufweisen, welche die Kanalwandung 10 gegen den inneren Schenkel 28 drücken. Sowohl die Ausbuchtungen 52 als auch die Zähne 54 können beim Einschieben des Kanalabschnitts 10 den nicht dargestellten, nach außen (d.h. also in den Figuren nach oben) stehenden Wickelfalzen bzw. Versteifungsrippen elastisch ausweichen bzw. hinter denselben einschnappen. Eine Behinderung des Einschiebens oder eine Verzerrung von Kanalwänden oder Flanschprofil erfolgt dadurch nicht.

Bei der in Fig. 7 dargestellten Ausführungsform ist das Hohlprofil des äußeren Flanschschenkels 18 mit dem zusätzlichen dreieckförmigen Hohlprofil 46 zu einem durchgehenden Hohlprofil zusammengefaßt. Der Zwischenverbinder 30 weist bei dieser Ausführungsform einen in das dreieckförmige Hohlprofil 46 eingepaßten abgekanteten und schräg nach innen weisenden Rand 56 auf, der für eine zusätzliche Versteifung der Stoßverbindung sorgt.

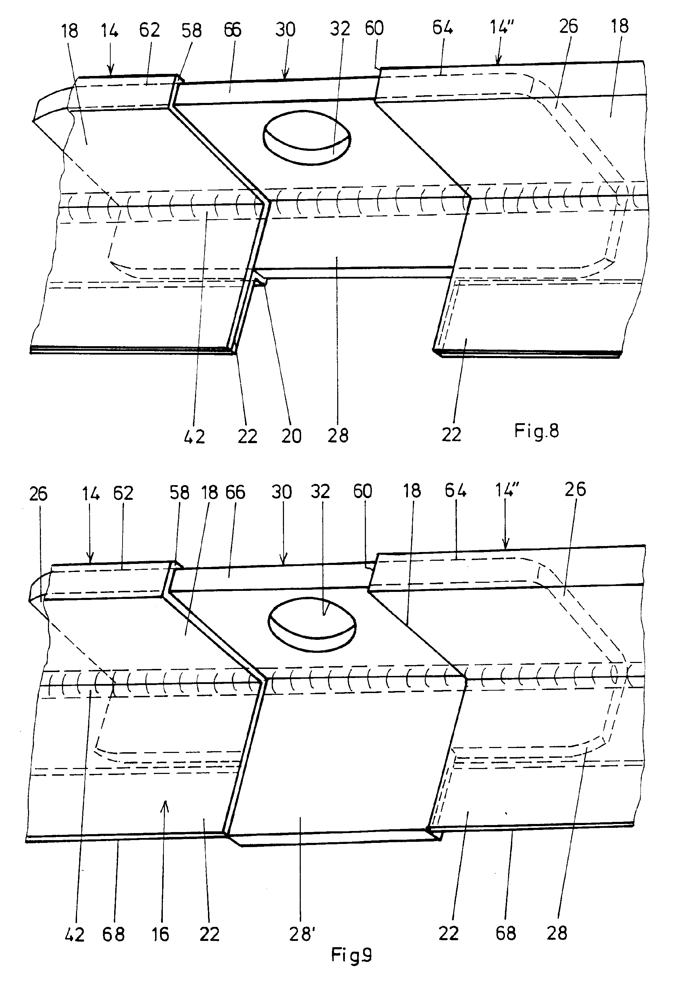

Aus Fig. 8 ist die in Fig. 2 dargestellte Ausführungsform im Bereich eines Zwischenverbinders in Teilschrägansicht zu sehen, wobei der Kanalabschnitt 10 weggelassen ist. Zwei Enden 58 bzw. 60 eines entweder aus einem Stück zusammengebogenen Flanschrahmens 14 oder von zwei aufeinanderfolgenden Flanschrahmenabschnitten 14, 14'' sind durch den in die offenen Profilenden 58 und 60 eingesteckten Zwischenverbinder 30 in ihrer Lage gehalten. Der Zwischenverbinder 30 ist dabei nur mit seinen Endabschnitten 62, 64 in die Hohlprofile der Flanschrahmenabschnitte 14, 14'' eingeschoben, während ein freiliegender Mittelabschnitt 66 den den nicht gezeigten Schraubbolzen aufnehmenden Durchbruch 32 enthält. Der freiliegende innere Schenkel 28 des Zwischenverbinders 30 liegt dabei in etwa an der Innenseite des nicht gezeigten Kanalabschnitts 10 an und kann, wenn größere Stabilität gewünscht wird, an diesem befestigt werden. Die Dichtungsraupe 42 läuft, wie oben erläutert, in jedem Falle lückenlos im Bereich der Flanschrahmenabschnitte 14, 14'' und des Mittelabschnitts 66 des Zwischenverbinders 30 durch. Da in diese Dichtungsraupe die gesamte Endkante des Kanalabschnitts 10 eingebettet ist, ist eine bei bekannten Stoßverbindungen nur mit großem Aufwand zu erzielende Abdichtung erreicht.

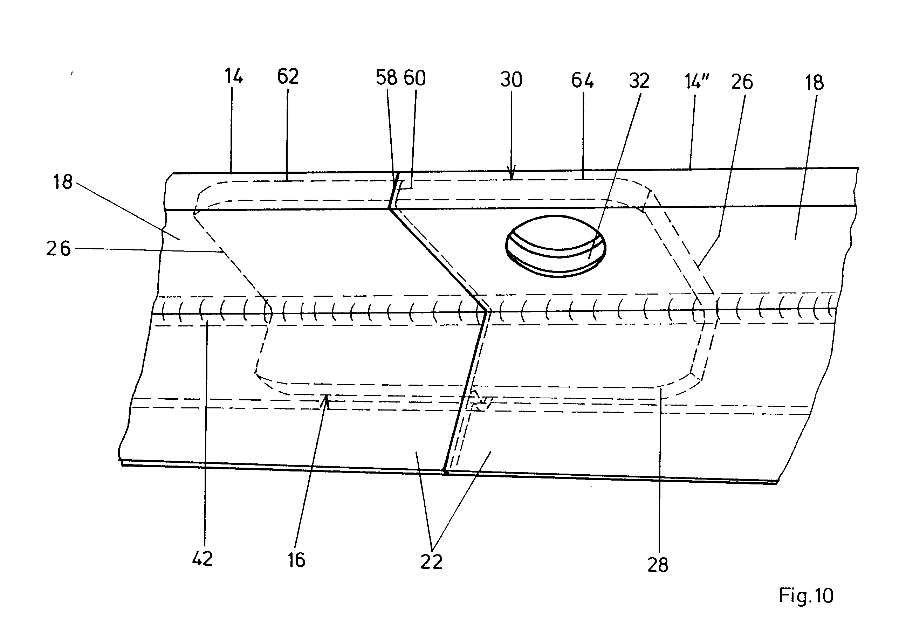

Das Ausführungsbeispiel gemäß Fig. 9 unterscheidet sich von demjenigen der Figuren 2 und 8 dadurch, daß der innere Schenkel 28' im Mittelabschnitt 66 des Zwischenverbinders 30 bis zum Ende 68 des inneren Schenkels 16 der Flanschrahmenabschnitte 14 und 14' verlängert und bündig mit der Außenseite des inneren Flanschschenkels ausgeführt ist, so daß er auf einer verhältnismäßig großen Fläche satt an der Innenfläche des nicht gezeigten Kanalabschnitts 10 anliegt und gewünschtenfalls an diesem befestigt werden kann.

In Fig. 10 ist eine Ausführungsform dargestellt, bei der die beiden Enden 58 und 60 der Flanschrahmenabschnitte 14 und 14'' zusammenstoßen und der Zwischenverbinder 30 vollständig in die beiden Hohlprofile des Flanschrahmens aufgenommen ist. In diesem Falle durchsetzt der Durchbruch 32 zur Aufnahme eines nicht gezeigten Schraubbolzens auch die Hohlprofilwände des einen Flanschrahmenabschnitts 14''.

Da bei rechteckigen Kanalquerschnitten normalerweise geradlinige Flanschrahmenabschnitte durch als Eckwinkelstücke ausgebildete Zwischenverbinder miteinander verbunden werden, dienen die in den Fig. 8 bis 10 dargestellten Ausführungsformen vorwiegend für runde oder flachovale Kanäle und Flanschrahmen.

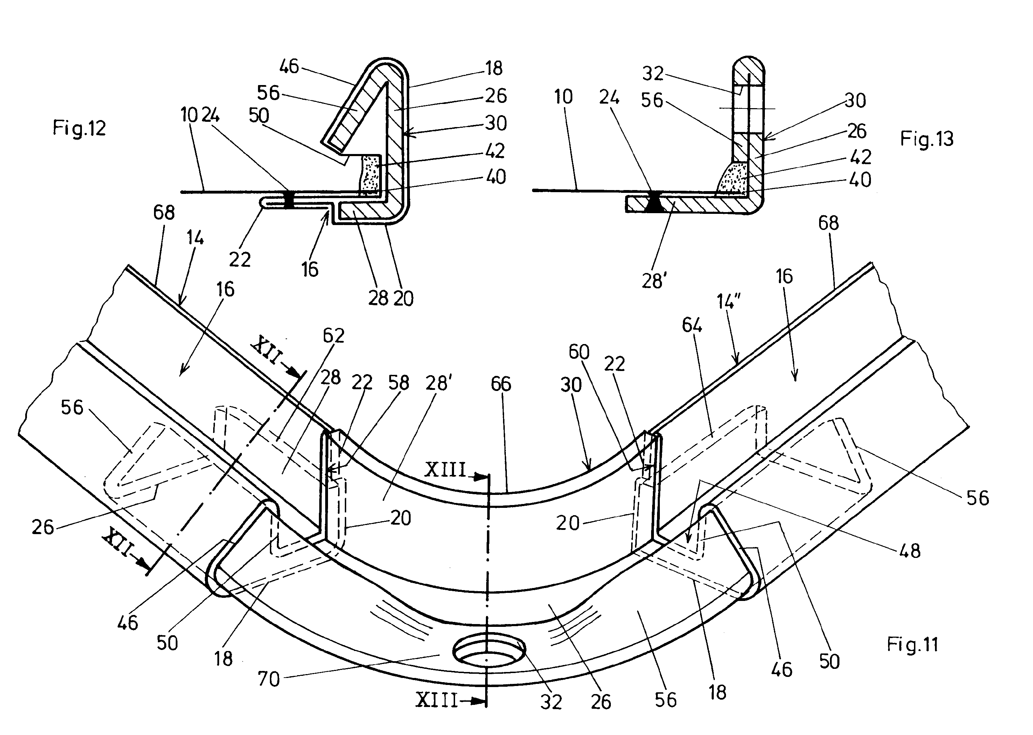

Das in den Fig. 11 bis 13 gezeigte Ausführungsbeispiel ist für rechteckige Kanäle mit abgerundeten Ecken geeignet, wobei ein solcher Eckbereich in Fig. 11 gezeigt ist. Die beiden Flanschrahmenabschnitte 14 und 14'' sind durch einen um 90° gebogenen Zwischenverbinder 30 miteinander verbunden, der mit seinen beiden Endabschnitten 62 und 64 in die offenen Profilenden 58,60 der Flanschrahmenabschnitte 14, 14'' eingesteckt ist und mit seinem freiliegenden Mittelabschnitt 66 eine abgerundete Ecke des Flanschrahmens bildet. Wie beim Ausführungsbeispiel der Fig. 7 weist der Zwischenverbinder 30 bei dieser Ausführungsform einen abgekanteten Rand 56 auf, der von der in Fig. 11 bis 13 nicht gezeigten Stoßfläche 19 (s. Fig. 1) wegweist und der in das entsprechende dreieckförmige Hohlprofil 46 der Flanschrahmenabschnitte 14, 14'' eingepaßt ist. Ferner weist der Zwischenverbinder 30 wie beim Ausführungsbeispiel der Fig. 9 einen verlängerten und verdickten inneren Schenkel 28' des Mittelabschnitts 66 auf, der an der Außenseite, auf der die nicht gezeigte Kanalwand 10 aufliegt, bündig in die inneren Schenkel 16 der Flanschrahmenabschnitte 14, 14'' übergeht. Auch die durchlaufende Dichtungsraupe 42 ist in Fig. 11 weggelassen. Sowohl diese Dichtungsraupe 42 als auch der in Fig. 11 weggelassene Kanalabschnitt 10 sind jedoch in die Schnittdarstellungen der Fig. 12 und 13 eingezeichnet.

Bei dieser Ausführungsform ist ein Durchbruch 32 zur Aufnahme eines nicht gezeigten Schraubbolzens etwa in der Mitte des Mittelabschnitts 66 des Zwischenverbinders 30 derart vorgesehen, daß er den äußeren Profilschenkel 26 des Zwischenverbinders und den abgekanteten Rand 56 durchsetzt. In dem den Durchbruch 32 enthaltenden Bereich 70 ist der Zwischenverbinder in der aus den Fig. 11 und 13 ersichtlichen Weise abgeflacht, so daß der abgekantete Rand 56 am äußeren Profilschenkel 26 anliegt. Dadurch ergibt sich im Bereich 70 eine gute Stabilität und ein guter Sitz des Schraubbolzens am Zwischenverbinder 30.

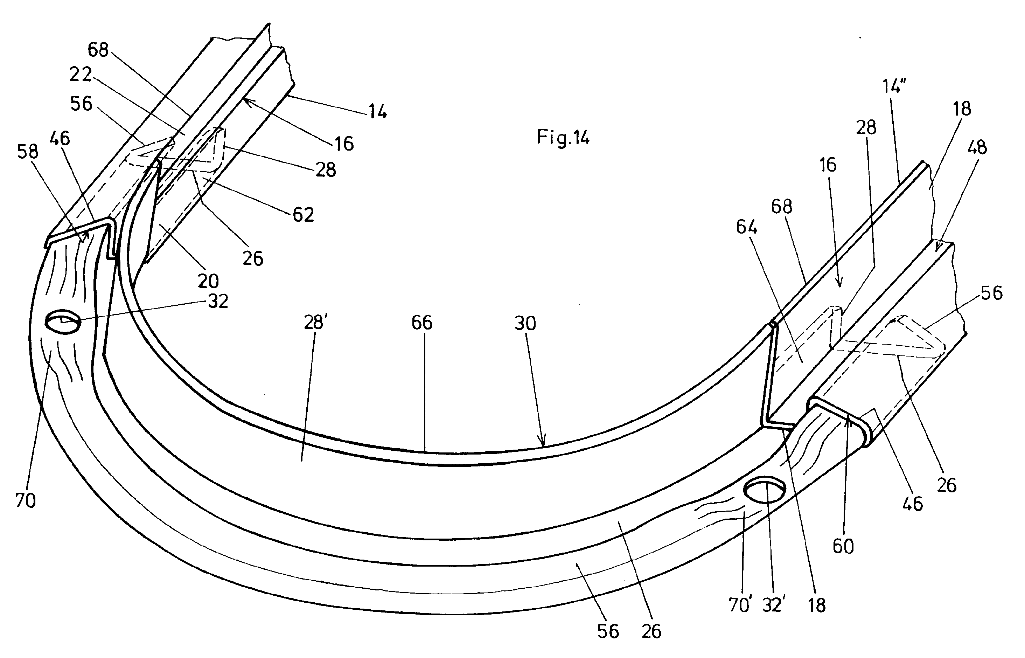

In Fig. 14 ist ein Teil einer Ausführungsform mit flachovalem Kanalquerschnitt dargestellt, wobei der Zwischenverbinder 30 bei dieser Ausführungsform in seinem von den im wesentlichen geradlinigen Flanschrahmenabschnitten 14 und 14'' freien Mittelabschnitt 66 um 180° gebogen ist. Bei dieser Ausführungsform ist die verlängerte und verdickte Ausbildung des inneren Profilschenkels 28' im Mittelbereich 66 besonders wichtig, da der durch die verhältnismäßig kurzen, in die offenen Profilenden der Flanschrahmenabschnitte 14 und 14'' ragenden Endabschnitte 62 und 64 erzielte Halt zu gering wäre, wenn der nicht gezeigte Kanalabschnitt 10 nicht zusätzlich am verlängerten und unmittelbar an der Innenseite des Kanalabschnitts anliegenden inneren Schenkel 28' nicht zusätzlich gehalten und daran befestigt werden könnte. Bei dieser Ausführungsform sind statt des einen Durchbruchs der Ausführungsform gemäß Fig. 11 bis 13 nahe den Enden des Mittelbereichs 66 zwei Durchbrüche 32, 32' für nicht gezeigte Schraubbolzen in jeweils abgeflachten Bereichen 70 bzw. 70' des äußeren Profilschenkels 26, 56 vorgesehen. Bei kleineren flachovalen Kanälen könnte auch nur ein Durchbruch 32 in der Mitte des Mittelabschnitts 66 vorgesehen werden wie bei der oben geschilderten Ausführungsform gemäß Fig. 11 bis 13.

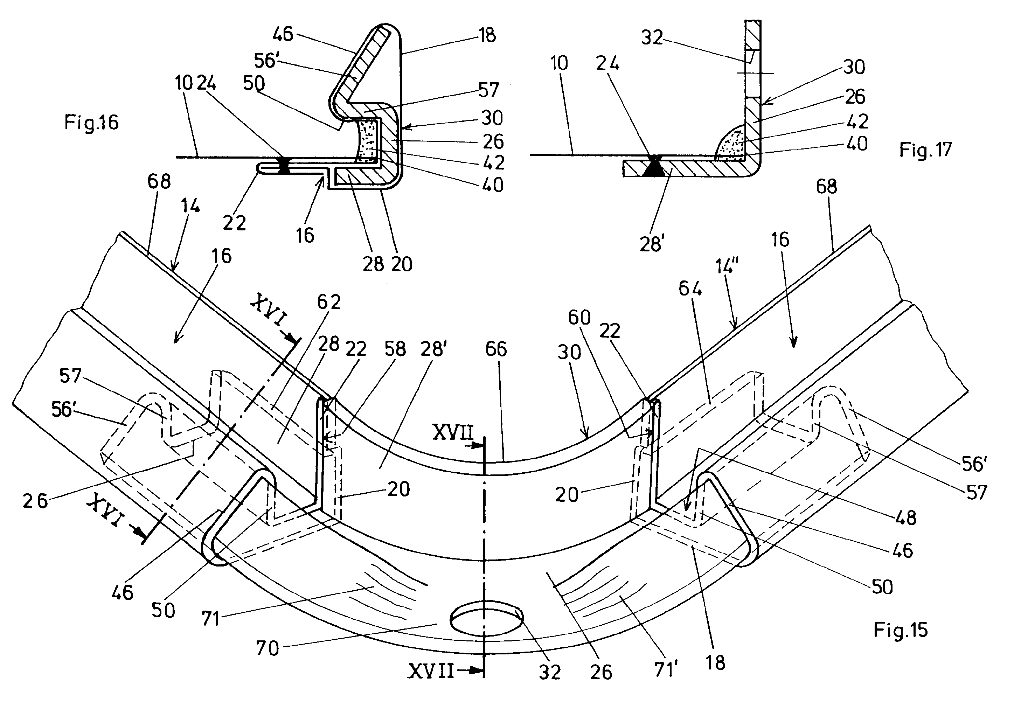

Das Ausführungsbeispiel gemäß Fig. 15 bis 17 ist dem in den Figuren 11 bis 13 gezeigten ähnlich. Es unterscheidet sich von diesem vorangehenden Ausführungsbeispiel jedoch durch die Querschnittsform der Zwischenverbinder 30, insbesondere des abgekanteten Randes 56', der im Gegensatz zu dem von der Stoßfläche wegweisenden abgekanteten Rand 56 gemäß Fig. 11 bis 13 zu der in Fig. 15 unten und in den Fig. 16 und 17 rechts zu denkenden, nicht eingezeichneten Stoßfläche 19 (s. Fig. 1) hinweist. Der abgekantete Rand 56' ist bei dieser Ausführungsform über einen senkrecht zur Stoßfläche verlaufenden Steg 57 mit dem übrigen Teil des Zwischenverbinders 30 verbunden. Im abgeflachten Bereich 70 ist bei dieser Ausführungsform der abgekantete Rand 56' und somit natürlich auch der senkrechte Steg 57 weggelassen, so daß sich in diesem Bereich, wie aus Fig. 17 zu ersehen, ein flacher, ebener, parallel zur Stoßfläche 19 verlaufender Querschnitt des Flanschschenkels 26 ergibt. Diese Form des Zwischenverbinders ist noch einfacher herzustellen als die in den Fig. 11 bis 13 gezeigte Ausführungsform und wird daher für viele Anwendungsfälle bevorzugt. Vom abgeflachten Bereich 70 ergibt sich dann beidseitig ein Übergangsbereich 71 bzw. 71', in welchem der flache Flanschschenkelquerschnitt sich aufwölbt, um kurz vor dem offenen Profilende 58, 60 die Querschnittsform gemäß Fig. 16 mit abgekantetem Rand 56' und Steg 57 zu erreichen. Im übrigen entsprechend die Darstellungen der Fig. 15 bis 17 den Darstellungen in den Fig. 11 bis 13.

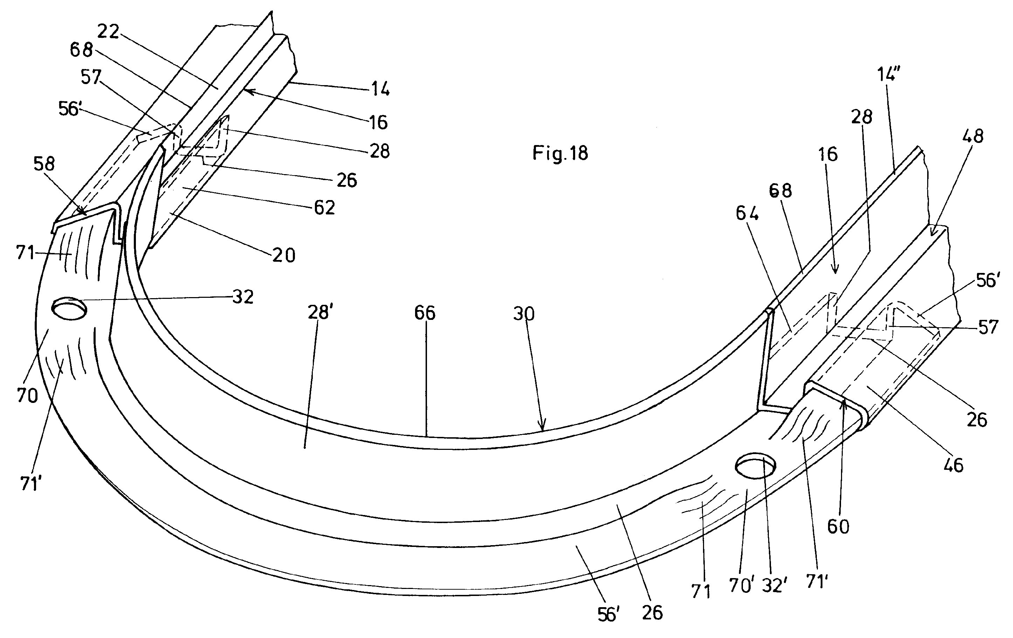

Ebenso ist die Ausführungsform gemäß Fig. 18 ähnlich der Ausführungsform gemäß Fig. 14, wobei jedoch auch hier die abgeflachten Stellen 70 bzw. 70' keinen abgekanteten Rand 56' aufweisen, so daß sich in diesen Bereichen ein einfacher flacher Querschnitt des Flanschschenkels 26 ergibt, wie er in Fig. 17 dargestellt ist. Die ansteigenden, sich langsam aufwölbenden Übergangsbereiche 71 bzw. 71' sind bei dieser Ausführungsform jeweils zu beiden Seiten anschließend an die flachen Bereiche 70 bzw. 70' vorgesehen. Im übrigen entspricht die Ausführungsform gemäß Fig. 18 den Einzelheiten der Ausführungsform gemäß Fig. 14.

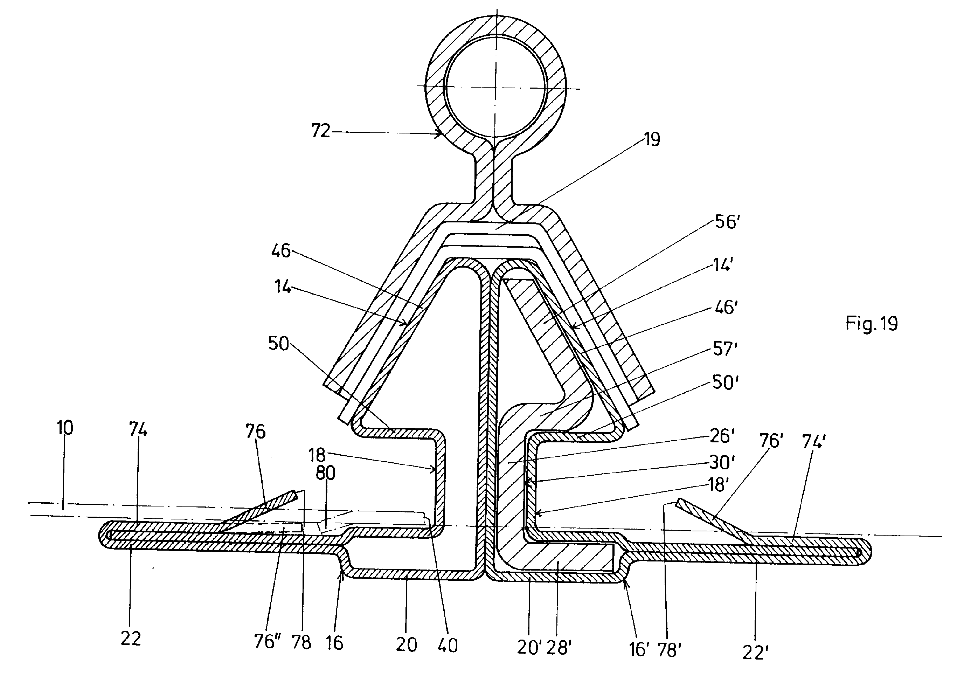

Bei der für Rundrohre geeigneten Ausführungsform gemäß Fig. 19 werden in einer aus der DE-PS 33 41 107 bekannten Art die beiden Flanschrahmen 14 und 14' durch einen auf ihre Außenseite aufgesetzen und festgezogenen Spannring 72 fest aneinander gehalten, dessen Funktion hier nicht näher erläutert werden muß. Die Flanschrahmen 14, 14' durchsetzende Schraubbolzen sind hier nicht erforderlich. Zur deutlicheren Sichtbarkeit der Form des Flanschrahmens 14 ist nur in den rechten Flanschrahmen 14' ein Zwischenverbinder 30 mit abgekantetem Rand 56' gemäß der Ausführungsform von Fig. 16 eingezeichnet, während der linke Flanschrahmen 14 in der Darstellung der Fig. 19 leergelassen ist. Alle Teile des Flanschrahmens 14' und des Zwischenverbinders 57' sind gegenüber der Darstellung in Fig. 16 mit den entsprechenden, mit einem Strich versehenen Bezugszahlen bezeichnet.

Bei dieser Ausführungsform ist vom Ende des flachen Profilteils 22, 22' der inneren Flanschschenkel 16, 16' ein an der Innenseite des rohrförmigen Kanalabschnitts 10 (10' ist der deutlicheren Darstellung halber weggelassen) anliegender Blechabschnitt 74, 74' vorgesehen, dessen zur Stoßfläche 19 hinweisender freier Rand zur Bildung eines Ringstegs 76, 76' nach außen abgewinkelt ist. Wenn der Flanschring 14 in das offene Ende des Rohrabschnitts 10 eingetrieben wird, wird der Ringsteg 76 in die gestrichelt eingezeichnete Lage 76'' gebogen und infolgedessen spreizt sich seine freie Kante 78 an der Innenseite des Rohrabschnitts 10 ein, wodurch der Flanschrahmen 14 am Rohrabschnitt 10 gegen ein Herausziehen weitgehend festgelegt wird. Gleichzeitig wird durch die Vorspannung des Ringstegs 76 der Rohrabschnitt 10 in eine gewünschte Kreisform gedrückt. Beim rechten Flanschrahmen 14' ist der Zustand vor dem Eintreiben in einen nicht dargestellten Rohrabschnitt gezeigt. Durch das Einspreizen seiner freien Kante 78 an der Innenseite des Rohrabschnitts 10 übernimmt der Ringsteg 76 bei dieser Ausführungsform selbst die Dichtfunktion und die Anbringung einer gesonderten Dichtraupe kann entfallen.

Nahe dem Ende 40 des Rohrabschnitts 10 sind aus der Wandung des Rohrabschnitts einzelne Abstützvorsprünge 80 nach innen gedrückt, hinter denen die Außenkante 78 des Ringstegs 76 eingeschnappt ist, was zu einer zusätzlichen Sicherung des Flanschrahmens 14 am Rohrabschnitt 10 führt. Allerdings setzt diese Ausführungsform Rohrabschnitte mit sauberen und glatten Innenflächen im Randbereich voraus. Falls der innere Randbereich nicht sauber bzw. uneben ist, kommen nur Ausführungsformen mit Dichtraupe in Betracht. Jedoch können sowohl für die Herstellung einer Ausführungsform mit schrägem Ringsteg 76 als auch ohne schrägen Ringsteg dieselben Werkzeuge verwendet werden, da der schräge Ringsteg auf jeden Fall mit hergestellt und sodann einfach wieder eingedrückt werden kann. Dieses Eindrücken kann im gleichen Werkzeug durch einen zusätzlich eingeschalteten Biegebacken oder dgl. erfolgen.

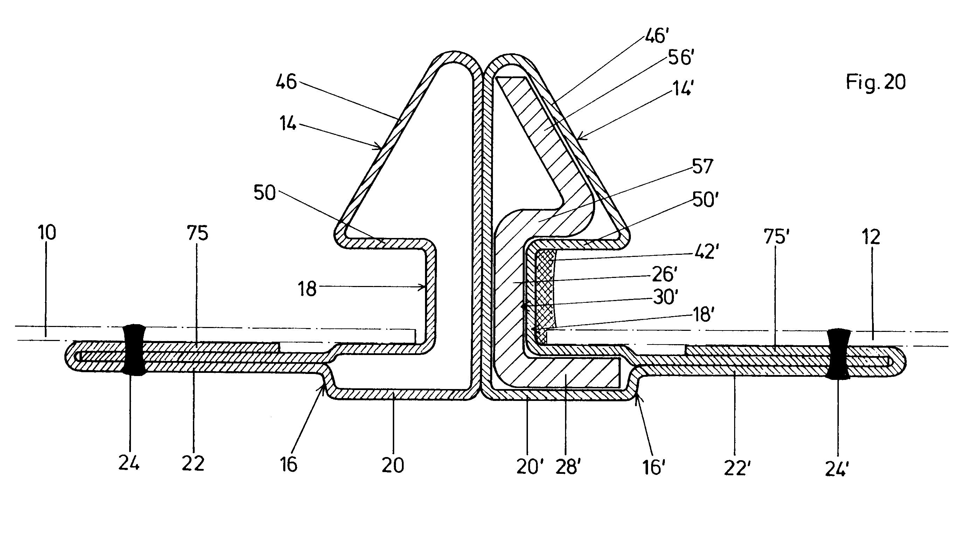

Eine sehr ähnliche Ausführungsform kann gemäß Fig. 20 auch bei geradwandigen Luftkanalabschnitten 10, 12 angewendet werden, wobei die Flanschrahmen 14, 14' nicht durch einen Spannring, sondern wie bei der Ausführungsform gemäß Fig. 1 durch in Fig 20 nicht gezeigte Schraubbolzen zusammengehalten werden. Bei dieser Ausführungsform ist natürlich kein abgewinkelter Ringsteg 76, 76' erforderlich, sondern der an der Innenseite der Luftkanalabschnitte 10, 12 anliegende Blechabschnitt 75, 75' läuft geradlinig aus. Die Festlegung an den Luftkanalabschnitten 10, 12 erfolgt hier wiederum durch Schweißpunkte 24, 24'. Durch die dreifache Lage von Blechabschnitten in den flach zusammengedrückten Profilteilen 22 und 22' ergibt sich im Zusammenhang mit den übrigen Merkmalen dieser Ausführungsform eine äußerst stabile Ausgestaltung der Stoßverbindung.

## Patentansprüche

1. Stoßverbindungen zwischen zwei runden, flachovalen oder rechteckigen Luftkanalabschnitten aus Blech, wobei am Ende jedes Kanalabschnitts ein Flanschrahmen befestigt ist, der in Umfangsrichtung des Flanschrahmens einander gegenüberliegende Flanschenden aufweist, die durch Zwischenverbinder gehalten sind, und dessen Profil im wesentlichen L-förmig ist und aus einem etwa senkrecht von der Kanalwandung nach außen ragenden äußeren Flanschschenkel und einem etwa parallel zur Kanalwandung angeordneten, an deren Innenseite anliegenden inneren Flanschschenkel besteht, und wobei Durchbrüche der Flanschrahmen und/oder Zwischenverbinder durchsetzende Schraubbolzen bzw. Spannringe oder Spannklemmen als Verbindungseinrichtungen zum dichten Aneinanderfügen der beiden Flanschrahmen vorgesehen sind, dadurch gekennzeichnet, daß beide Flanschschenkel (16, 18) wenigstens teilweise Hohlprofil (18, 20) besitzen, daß die von den Hohlprofilen gebildeten Hohlräume zu einem einzigen wenigstens teilweise L-förmigen Hohlraum verschmelzen und daß die Zwischenverbinder (30) wenigstens teilweise L-förmiges Profil (26, 28) besitzen, welches den L-förmigen Teil des Hohlraums der Flanschenden (58, 60) im wesentlichen ausfüllt.

2. Stoßverbindung nach Anspruch 1, dadurch gekennzeichnet, daß zwischen zwei Flanschenden (58, 60) gelegene Mittelabschnitte (66) der Zwischenverbinder (30) unmittelbar an der Innenseite der Kanalwandung (10, 12) anliegen.

3. Stoßverbindung nach Anspruch 1 oder 2, dadurch gekennzeichnet, daß der innere Flanschschenkel (16) über das Hohlprofil (20) hinaus verlängert (22) und mit der Kanalwandung fest verbunden ist.

4. Stoßverbindung nach den Ansprüchen 2 und 3, dadurch gekennzeichnet, daß die Mittelabschnitte (66) der Zwischenverbinder (30) bis zum Ende (68) des inneren Flanschschenkels (16) verlängert sind.

5. Stoßverbindung nach einem der Ansprüche 2 bis 4, dadurch gekennzeichnet, daß die Mittelabschnitte (66) der Zwischenverbinder (30) an der Kanalwandung (10) befestigt sind.

6. Stoßverbindung nach einem der vorangehenden Ansprüche, wobei die Endkante jedes Kanalabschnitts in eine Dichtungsraupe aus elastischem Dichtungsmaterial eingebettet ist, dadurch gekennzeichnet, daß die Dichtungsraupe (42) lückenlos um den gesamten Flanschrahmen (14, 30) verläuft.

7. Stoßverbindung nach einem der vorangehenden Ansprüche, dadurch gekennzeichnet, daß die Zwischenverbinder (30) in ihrer Längserstreckung gerade (Fig. 8 bis 10), gebogen (Fig. 11 bis 14) oder winkelförmig ausgebildet sind.

8. Stoßverbindung nach einem der vorangehenden Ansprüche, dadurch gekennzeichnet, daß die äußeren Flanschschenkel (18) zusätzlich zu ihrem Hohlprofil (18, 20) ein von der Stoßfläche der Kanalabschnitte (10, 12) wegweisendes dreieckförmiges Hohlprofil (46) enthalten.

9. Stoßverbindung nach Anspruch 8, dadurch gekennzeichnet, daß zwischen dreieckförmigen Hohlprofilen (46) und Kanalwandung (10) eine die Dichtungsraupe (42) enthaltende Rinne (48) gebildet ist.

10. Stoßverbindung nach Anspruch 8 oder 9, dadurch gekennzeichnet, daß die zur Kanalwandung (10) hinweisende Fläche (50) des dreieckförmigen Hohlprofils (46) zur Stoßfläche hin schräg nach innen verläuft und die Kanalwandung (10) gegen den inneren Schenkel (28, 28') des Zwischenverbinders (30) drückende wellenförmige Ausbuchtungen (52) bzw. Zähne (54) aufweist.

11. Stoßverbindung nach einem der Ansprüche 8 bis 10, dadurch gekennzeichnet, daß die äußeren Profilschenkel (26) des Zwischenverbinders (30) einen in das dreieckförmige Hohlprofil (46) des äußeren Flanschschenkels (18) eingepaßten abgekanteten Rand (56, 56') aufweisen.

12. Stoßverbindung nach Anspruch 11, dadurch gekennzeichnet, daß der abgekantete Rand (56) von der Stoßfläche (19) wegweist.

13. Stoßverbindung nach Anspruch 11, dadurch gekennzeichnet, daß der abgekantete Rand (56') zur Stoßfläche (19) hinweist.

14. Stoßverbindung nach einem der Ansprüche 11 bis 13, wobei die die Schraubbolzen aufnehmenden Durchbrüche in zwischen zwei Flanschenden liegenden Bereichen der Zwischenverbinder angeordnet sind, dadurch gekennzeichnet, daß in den die Durchbrüche (32, 32') enthaltenden Bereichen (70, 70') die äußeren Profilschenkel (26, 56, 56') der Zwischenverbinder (30) abgeflacht sind.

15. Stoßverbindung nach Anspruch 14, dadurch gekennzeichnet, daß in den abgeflachten Bereichen (70, 70') der abgekantete Rand (56, 56') zusammengedrückt bzw. weggelassen ist.

16. Stoßverbindung nach einem der vorangehenden Ansprüche, für runde, rohrförmige Luftkanalabschnitte, dadurch gekennzeichnet, daß vom inneren Flanschschenkel (16, 16') ein schräg nach außen zum äußeren Flansch (18, 18') hin abgewinkelter Ringsteg (76, 76') ausgeht, der unter Vorspannung ins Innere eines rohrförmigen Luftkanalabschnitts (10, 12) eingetrieben ist und sich mit seiner Außenkante (78, 78') an der Innenseite des Luftkanalabschnitts (10, 12) abstützt.

17. Stoßverbindung nach Anspruch 16, dadurch gekennzeichnet, daß die Außenkante (78) des Ringstegs (76) hinter Abstützvorsprüngen (80) eingeschnappt ist, die nahe dem Ende des Luftkanalabschnitts (10) aus dessen Wandung nach innen gedrückt sind.

## Claims

1. A butt joint between two round, flat-oval or rectangular sheet metal air duct portions, wherein attached to the end of each duct portion is a flange frame which has in the peripheral direction thereof opposite flange ends retained via intermediate connecting members and whose section is substantially L-shaped and comprises an outer flange arm extending outwards substantially perpendicularly from the duct wall and an inner flange arm disposed substantially parallel with the duct wall and bearing against its inner side, screw bolts or clamping rings or strainers being provided which extend through openings in the flange frame and/or the intermediate connecting members as connecting devices for sealably joining the two flange frames to one another, characterized in that the two flange arms (16, 18) have at least partially a hollow section (18, 20); the cavities formed by the hollow sections merge into a single at least partially L-shaped cavity; and the intermediate connecting members (30) have at least a partially L-shaped section (26, 28) which substantially fills the L-shaped portion of the cavity of the flange ends (58, 60).

2. A butt joint according to claim 1, characterized in that the central portions (66) of the intermediate connecting members (30) situated between two flange ends (58, 60) bear directly against the inner side of the duct wall (10, 12).

3. A butt joint according to claims 1 or 2, characterized in that the inner flange arm (16) is prolonged (22) beyond the hollow section (20) and is rigidly connected to the duct wall.

4. A butt joint according to claims 2 and 3, characterized in that the central portions (66) of the intermediate connecting members (30) are prolonged as far as the end (68) of the inner flange arm (16).

5. A butt joint according to one of claims 2 to 4, characterized in that the central portions (66) of the intermediate connecting members (30) are attached to the duct wall (10).

6. A butt joint according to one of the preceding claims, wherein the end edge of each duct portion is embedded in a sealing bead of resilient sealing material, characterized in that the sealing bead (42) extends continuously around the whole flange frame (14, 30).

7. A butt joint according to one of the preceding claims, characterized in that in their longitudinal extension the intermediate connecting members (30) are constructed straight (Figs. 8 to 10), bent (Figs. 11 to 14) or angular.

8. A butt joint according to one of the preceding claims, characterized in that in addition to their hollow section (18, 20), the outer flange arms (18) comprise a triangular hollow section (46) pointing away from the abutment surface of the duct portions (10, 12).

9. A butt joint according to claim 8, characterized in that a channel (48) forming the sealing bead (42) is formed between triangular hollow sections (46) and duct wall (10).

10. A butt joint according to claims 8 or 9, characterized in that the surface (50) of the triangular hollow section (46) pointing towards the duct wall (10) extends at an inclination inwards in the direction of the abutment surface, and the duct wall (10) has undulating bulges (52) or teeth (54) pressing against the inner arm (28, 28') of the intermediate connecting member (30).

11. A butt joint according to one of claims 8 to 10, characterized in that the outer section arms (26) of the intermediate connecting member (30) have a chamfered edge (56, 56') fitted into the triangular hollow section (46) of the outer flange arm (18).

12. A butt joint according to claim 11, characterized in that the chamfered edge (56) points away from the abutment surface (19).

13. A butt joint according to claim 11, characterized in that the chamfered edge (56') points in the direction of the abutment surface (19).

14. A butt joint according to one of claims 11 to 13, wherein the openings receiving the screw bolts are disposed in zones of the intermediate connecting members situated between two flange ends, characterized in that the outer section arms (26, 56, 56') of the intermediate connecting members (30) are flattened in the zones (70, 70') formed with the openings (32, 32').

15. A butt joint according to claim 14, characterized in that the chamfered edge (56, 56') is compressed in the flattened zones (70, 70') or omitted.

16. A butt joint according to one of the preceding claims, for round, tubular air duct portions, characterized in that extending from the inner flange arm (16, 16') is an annular web (76, 76') which is bent at an inclination outwards in the direction of the outer flange (18, 18') and which is driven with prestressing into the interior of a tubular air duct portion (10, 12) and bears via its outer edge (78, 78') against the inside of the air duct portion (10, 12).

17. A butt joint according to claim 16, characterized in that the outer edge (78) of the annular web (76) is snapped in behind bearing projections (80) which are pressed inwardly out of the wall of the air duct portion (10) adjacent its end.

## Revendications

1. Raccord bout à bout entre deux éléments de gaine de ventilation en tôle, de section circulaire, ovale aplatie ou rectangulaire, comprenant un cadre de bride fixé à l'extrémité de chaque élément de gaine et dont les parties périphériques en regard, sont maintenues par des liaisons intermédiaires, le cadre de bride ayant un profil en L comprenant une branche externe débordant vers l'extérieur, sensiblement perpendiculaire à la paroi de la gaine et une branche interne sensiblement parallèle à cette paroi sur la face interne de laquelle elle s'appuie, des dispositifs de liaison, tels que des vis traversant des ouvertures des cadres de bride et/ou des liaisons intermédiaires, des colliers ou des pinces de serrage étant prévus pour assurer l'étanchéité des deux cadres de bride l'un sur l'autre, caractérisé en ce que les deux branches de bride (16, 18) présentent chacune au moins partiellement un profil creux (18, 20), ces profils étant reliés de manière à délimiter un seul volume ayant au moins partiellement une forme en L, tandis que les liaisons intermédiaires (30) présentent elles-mêmes, au moins en partie, un profil en L (26, 28) remplissant sensiblement la partie du volume creux des extrémités de bride (58, 60).

2. Raccord selon la revendication 1, caractérisé en ce que la partie médiane (66) des liaisons intermédiaires (30), située entre les extrémités de bride (58, 60) est directement en contact avec la face interne de la paroi de la gaine.

3. Raccord selon la revendication 1 ou 2, caractérisé en ce que la branche interne de bride (16) se prolonge par une partie (22) au-delà du profilé creux (20) et est solidarisée avec la paroi de la gaine.

4. Raccord selon les revendications 2 et 3, caractérisé en ce que les parties médianes (66) des liaisons intermédiaires (30) sont prolongées jusqu'à l'extrémité (68) de la branche interne de bride (16).

5. Raccord selon une des revendications 2 à 4, caractérisé en ce que les parties médianes (66) des liaisons intermédiaires (30) sont fixées à la paroi de la gaine (10).

6. Raccord selon une des revendications précédentes, dont le bord extrême de chaque élément de gaine est noyé dans un cordon d'étanchéité, fait d'un matériau élastique, caractérisé en ce que le cordon d'étanchéité (42) s'étend sans discontinuité tout le long du cadre de bride (14, 30).

7. Raccord selon une des revendications précédentes, caractérisé en ce que les liaisons intermédiaires (30) sont, dans leur dimension principale, droites (figures 8 à 10), cintrées (figures 11 à 14) ou pliées à angle.

8. Raccord selon une des revendications précédentes, caractérisé en ce que les branches externes des brides (18), en plus de leur propre profilé creux (18, 20) comportent un profilé creux supplémentaire (46) en forme de triangle à pointe opposée au plan de joint des éléments de gaine (10, 12).

9. Raccord selon la revendication 8, caractérisé en ce que le profil creux (46) triangulaire et la paroi de la gaine (10) délimitent une rainure (48) contenant le cordon d'étanchéité (42).

10. Raccord selon la revendication 8 ou 9, caractérisé en ce que la face (50) du profilé triangulaire (46) creux en regard de la paroi de la gaine (10) est inclinée vers l'intérieur et vers le plan de joint et présente des découpes ondulées (52) ou des dents (54) qui appliquent la paroi de la gaine (10) contre les branches internes (28, 28') de la liaison intermédiaire (30).

11. Raccord selon l'une des revendications 8 à 10, caractérisé en ce que les branches externes (26) de la liaison intermédiaire (30) présentent un bord rabattu (56, 56') selon une forme correspondant à celle du profilé creux triangulaire (46) de la branche externe de bride (18).

12. Raccord selon la revendication 11, caractérisé en ce que le bord rabattu (56) est dirigé vers l'extérieur par rapport au plan de joint (19).

13. Raccord selon la revendication 11, caractérisé en ce que le bord rabattu (56') est dirigé vers le plan de joint (19).

14. Raccord selon une des revendications 11 à 13, dont les ouvertures de passage des vis de fixation sont situées dans deux zones des liaisons intermédiaries reliant les extrémités de bride, caractérisé en ce que dans ces zones (70, 70') recevant les ouvertures (32, 32'), les branches externes (25, 56, 56') des liaisons intermédiaires (30) sont aplaties.

15. Raccord selon la revendication 14, caractérisé en ce que dans les zones aplaties (70, 70'), le bord rabattu (56, 56') est refermé comprimé sur lui-même ou supprimé.

16. Raccord selon une des revendications précédentes, destiné à des gaines tubulaires de section circulaire, caractérisé en ce que la branche interne de brides (16, 16') présente un collet annulaire (76, 76'), coudé en direction de l'extérieur et de la branche externe (18, 18'), et qui est engagé avec tension à l'intérieur d'un élément tubulaire de gaine (10, 12), sur la face interne duquel il s'appuie par son bord externe (78, 78').

17. Raccord selon la revendication 16, caractérisé en ce que le bord externe (78) du collet annulaire (76) est encliqueté derrière des reliefs d'appui (80) obtenus par repoussage vers l'intérieur, de la paroi de l'élément de gaine (10), près de l'extrémité de celui-ci.
